# EUROPÄISCHE PATENTSCHRIFT

(11) **EP 1 885 535 B1**
(45) Veröffentlichungstag und Bekanntmachung des Hinweises auf die Patenterteilung: **29.10.2008**
(21) Anmeldenummer: 06754837.0
(22) Anmeldetag: 25.04.2006
(51) Int. Cl.: B29B 7/76

(54) **SPRÜHKOPF**
SPRAY HEAD
TETE DE PULVERISATION

(30) Priorität: 20.05.2005 DE 102005023233
(43) Veröffentlichungstag der Anmeldung: 13.02.2008
(73) Patentinhaber: KraussMaffei Technologies GmbH, 80997 München (DE)
(72) Erfinder: SCHEIDT, Ernst, 85221 Dachau (DE)
(74) Vertreter: Zollner, Richard
(86) Internationale Anmeldenummer: PCT/EP2006/061812
(87) Internationale Veröffentlichungsnummer: WO 2006/122865

(56) Entgegenhaltungen:
- WO-A-96/27484
- DE-C1- 19 507 910
- US-A- 3 913 892
- US-A- 4 082 512

## Beschreibung

Die vorliegende Erfindung betrifft einen Sprühkopf gemäß dem Oberbegriff des Anspruchs 1.

Sprühköpfe zum Aufbringen von reaktivem Material auf eine Oberfläche sind allgemein bekannt. Solche Sprühköpfe werden beispielsweise, verwendet, um ein Polyurethan-Material aus den Komponenten Polyol und Isocyanat zunächst zu vermischen und dann auf eine Oberfläche (z.B. die Oberfläche eines Formwerkzeugs) aufzubringen. Nach dem Ausreagieren der beiden reaktiven Komponenten bildet sich auf der Oberfläche eine dünne Kunststoffhaut, die abgezogen werden kann. Solche Kunststoffhäute können anschließend hinterschäumt oder hinterspritzt werden, so dass sich ein Produkt mit einer Oberflächenhaut aus einem haptisch angenehmen Polyurethan-Material schaffen lässt.

Bekannt sind dabei Sprühköpfe, in denen die zwei reaktiven Komponenten in einer Mischkammer miteinander vermischt und die Mischung über einen Austragskanal und eine Sprühdüse ausgebracht werden.

Problematisch ist jedoch immer der oft voluminöse Aufbau einer solchen Vorrichtung. Überdies ergeben sich teilsweise Probleme bei der Reinigung nach jedem Sprühvorgang.

In der WO 96/27484 ist eine Vorrichtung zum Mischen mischfähiger Komponenten der gattungsgemäßen Art beschrieben, wobei die Mischkammer im Reinigungskolben angeordnet ist. Jedoch besteht bei dieser Vorrichtung das Problem, dass das in der Mischkammer befindliche Reaktionsgemisch ausreagieren kann und sich dann im Reinigungskolben festsetzt, so dass die gesamte Mischeinrichtung funktionsunfähig wird.

Ein ähnliches Problem ist auch bei einer Vorrichtung zum Mischen mischfähiger Komponenten gemäß der DE 195 07 910 C1 gegeben.

Der Vollständigkeit halber wird noch auf die US 3,913,892 hingewiesen bei der ein Mischapparat für flüssige Reaktionskomponenten vorgestellt ist. Dabei ist jedoch kein Reinigungskolben im eigentlichen Sinne angegeben, sondern eine Schiebereinheit, welche die Steuerung der Komponentenflüsse übernimmt.

Aufgabe der vorliegenden Erfindung ist es, einen an sich bekannten Sprühkopf weiterzuentwickeln und zu verbessern.

Diese Aufgabe wird durch die im Anspruch 1 genannten Merkmale gelöst.

Zum einen wird die Mischkammer gemäß der vorliegenden Erfindung im wesentlichen im hin und her bewegbaren Kolben angeordnet. Der Kolben ist dabei derart konstruktiv ausgestaltet, dass im Zusammenspiel mit den Materialzufuhreinrichtungen in zumindest einer Position (nachfolgend auch "erste Position" genannt) des Kolbens eine Zufuhr der Komponenten von den Materialzufuhreinrichtungen zur Mischkammer gestattet und diese Mischung dann auch in einem Austragskanal ausgebracht werden kann. Zum anderen ist eine Luft- und/oder Flüssigkeitsversorgungseinrichtung vorgesehen, mit der die Mischkammer in zumindest einer zweiten Position des Kolbens in Verbindung bringbar ist. Auf diese Art und Weise lässt sich die Mischkammer, wie auch der Austragskanal, aber auch alle anderen im Kolben angeordneten Kanäle durch Ausblasen oder Spülen reinigen, so dass keine Aushärtung bzw. Verstopfung in diesem Bereich erfolgen kann, was zu einer Zusetzung des Sprühkopfes führen würde.

Der Austragskanal kann beispielsweise in einer dünnen und stachelartigen Sprühlanze angeordnet sein, mit der auch noch ansonsten unzugängliche Stellen erreicht werden können. Ausgangsseitig des Austragskanals und insbesondere am ausgangsseitigen Ende der Sprühlanze ist eine Sprühdüse angeordnet, mittels der das vermischte Material in Form eines bestimmten Sprühstrahls und mit einer gewünschten Sprühverteilung auf einer Oberfläche aufgebracht werden kann.

Um eine gewünschte und gleichbleibende Produkt-Qualität zu gewährleisten, ist es oftmals notwendig, die noch nicht miteinander vermischten Ausgangmaterialien dann zirkulieren zu lassen, wenn gerade kein Sprühvorgang durchgeführt wird. Dazu ist vorzugsweise ein Rückflusskanal vorgesehen, über den zumindest zeitweilig eine Rezirkulation durchgeführt wird.

In der Materialzufuhreinrichtung kann dann ein Ventil angeordnet sein, welches zum Steuern des Materialflusses dient. Insbesondere kann der Strömungsweg zur Mischkammer dann freigegeben werden, wenn der Rückfluss im Rückflusskanal gerade unterbunden ist.

Als besonders einfache Variante hat sich die Ausgestaltung des Ventils in Form eines Rückschlagventils herausgestellt. Ein solches Rückschlagventil öffnet sich dann, wenn der Rückfluss über den Rückflusskanal unterbunden wird, und sich infolge dessen eine Druckerhöhung in der Materialzufuhr einstellt. Sobald das Rückschlagventil ab einem bestimmten Druck geöffnet ist, kann die jeweilige reaktive Materialkomponente dann zur Mischkammer geführt werden. Wird der Rückflusskanal wieder freigeschaltet, so dass die Materialkomponente zurückfließen kann, fällt der Druck entsprechend ab, das Rückschlagventil schließt und eine weitere Förderung zur Mischkammer ist unterbunden. Natürlich lassen sich auch andere Möglichkeiten für die Realisierung eines solchen Ventils angeben.

Die vorliegende Erfindung wird nachfolgend anhand von zwei Ausführungsbeispielen und mit Bezug auf die beiliegenden Zeichnungen näher erläutert. Die Zeichnungen zeigen in:
- **Fig. 1:**: eine schematisch dargestellte Ausführungsform eines erfindungsgemäßen Sprühkopfs in Draufsicht gemäß einer ersten Ausführungsform,
- **Fig. 2:**: eine schematisch dargestellte Ausführungsform des Sprühkopfs aus Fig. 1 in Seitenansicht,
- **Fig. 3:**: eine schematische Darstellung des in Fig. 1 gezeigten Sprühkopfes in einer Schnittdarstellung gemäß Linie A-A aus Fig. 2,
- **Fig. 4:**: eine vergrößerte Teilschnittdarstellung des Ausschnitts B aus Fig. 3,
- **Fig. 5:**: eine schematisch dargestellte Ausführungsform eines erfindungsgemäßen Sprühkopfs in einer Schnittansicht gemäß einer zweiten Ausführungsform in einer ersten Betriebsstellung und
- **Fig. 6:**: eine schematisch dargestellte Ausführungsform des erfindungsgemäßen Sprühkopfs gemäß Fig. 5 in einer Schnittansicht gemäß in einer ersten Betriebsstellung

Der erfindungsgemäße Sprühkopf ist in den Figuren ohne Ankopplung an ein Gesamtsystem dargestellt. Der Einbau eines solchen Sprühkopfes in ein solches Gesamtsystem ist aus dem Stand der Technik jedoch hinreichend bekannt und muss nicht gesondert erläutert werden.

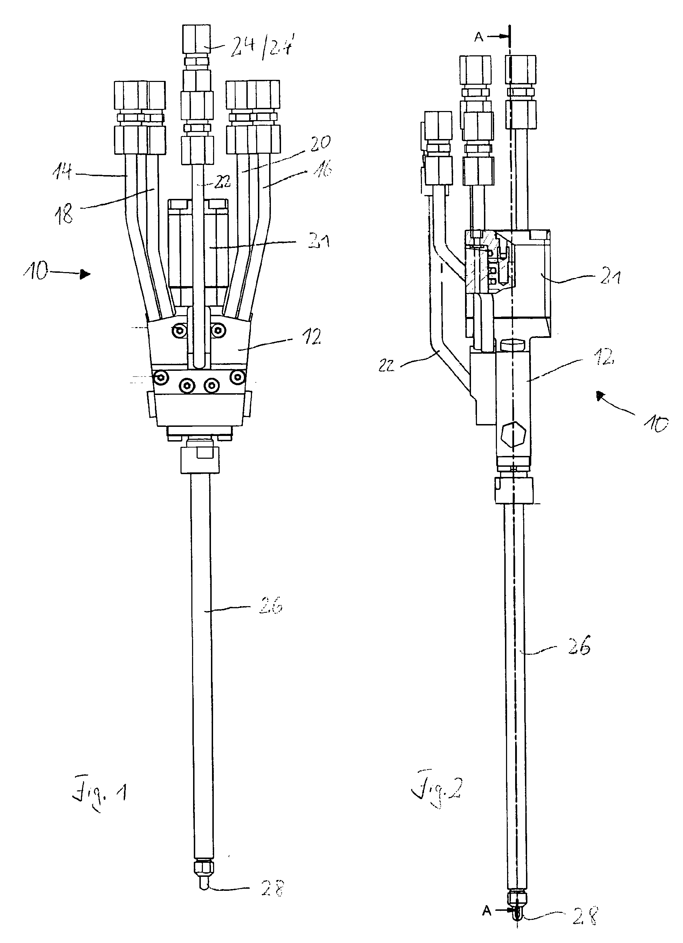

In der Draufsicht der Fig. 1 ist eine erste Ausführungsform eines erfindungsgemäßen Sprühkopfs 10 dargestellt, wobei an einen eigentlichen und zentralen Mischkörper 12 eine Reihe von angeschlossenen Zu- und Abflüssen für die reaktiven Ausgangsmaterialien und andere Medien dargestellt sind, die nachfolgend im einzelnen erläutert werden.

Eine erste Materialkomponente für die Ausbildung eines reaktiven Materialgemisches wird über eine Zuführleitung 14 dem Mischkörper 12 zugeführt. Die erste Materialkomponente kann bei nicht durchgeführtem Sprühvorgang über die Rückführleitung 18 wieder zu einem nicht dargestellten Behältnis zurückgeführt werden. Die beiden Leitungen 14 und 18 können dabei insgesamt an einem Hochdrucksystem angekoppelt sein, bei dem aus einem Behältnis über eine Pumpe das Material mit einem entsprechenden Druck zur Verfügung gestellt wird bzw. wieder zu diesem Behältnis zurückgefördert wird.

In analoger Weise ist eine Zufuhrleitung 16 für die zweite Materialkomponente eines später auszubildenden reaktiven Materialgemischs vorgesehen, die ebenfalls in den Mischkörper 12 mündet. Vom Mischkörper 12 zurück führt die Rückführleitung 20, mit der die zweite Materialkomponente für den Fall, dass nicht gesprüht wird und damit nichts aus dem Sprühkopf ausgetragen wird, zurückgeführt wird.

Die Leitung 22 bezeichnet eine Luft- und/oder Spülmittelzufuhrleitung, die ebenfalls an dem Mischkörper 12 angeschlossen ist und, wie später noch zu erklären sein wird, Spülluft dem Mischkörper 12 zuführt.

Am Mischkörper 12 ist ferner ein hydraulischer Kolbenantrieb 21 vorgesehen, dessen Gehäuse an dem Gehäuse des Mischkörpers 12 befestigt ist und der einen Hydraulikkolben 30 umfasst, dessen Funktion später noch erläutert wird. Der hydraulische Kolbenantrieb 21 ist mit zwei Hydraulikleitungen 24, 24' , nämlich einer Hydraulikzufuhr- und einer Hydraulikrückfuhrleitung, verbunden.

Im unteren Bereich der Figuren 1 und 2 ist eine Sprühlanze 26 am Mischkörper 12 angeordnet, welche in einer Sprühdüse 28 endet. Über die Sprühdüse 28 kann das aus den Materialkomponenten bestehende, reaktive Materialgemisch ausgetragen und auf eine nicht weiter dargestellte Oberfläche aufgebracht werden.

Im Mischkörper 12 sind zwei Ventilvorrichtungen 34 und 35 angeordnet, in die jeweils eine der beiden Materialzufuhrleitungen 14 und 16 mündet. Die beiden Ventilvorrichtungen 34 und 35 sind jeweils nach Art eines Rückschlagventils ausgebildet. In jedem Rückschlagventil 34 und 35 ist eine Ventilnadel 36 und 37 vorgesehen, die mittels Ventilfedern 38 und 39 gegen einen Ventilsitz vorgespannt sind. Durch die federbelasteten Ventilnadeln 36 und 37 wird die Materialzufuhr von den beiden Zufuhrleitungen 14 bzw. 18 zu einer Mischkammer 44 abgesperrt. Es besteht jedoch eine Verbindung zwischen der Zufuhrleitung 14 und der Rückführleitung 18 bzw. zwischen der Zufuhrleitung 16 und der Rückführleitung 20, so dass in diesem Fall eine Rezirkulation der beiden noch nicht miteinander vermischten Ausgangsmaterialien erreicht ist.

Allerdings ist der Rückfluss versperrbar ausgebildet. Dies kann durch entsprechende - vorliegend nicht dargestellte - Ventile realisiert sein. Wird der Materialrückfluss versperrt, so erhöht sich der Druck in der Materialzufuhr. Erreicht der Druck eine bestimmte Höhe über der Federvorspannung so werden die Ventilnadeln 36 und 37 gegen den Widerstand der entsprechenden Federn 38 und 39 zurückgedrängt. In diesem Zustand kann die jeweilige Materialkomponente über einen Ventilhohlraum und einen im Mischkörpergehäuse angeordneten Kanal zu einer ersten bzw. einer zweiten Düse 40 oder 41 gelangen. Von dieser Düse 40 und 41 führen weitere Bohrungen zu einer zentralen Bohrung 50, in der ein hin- und her bewegbarer Reinigungs- und Steuerkolben 32 aufgenommen ist.

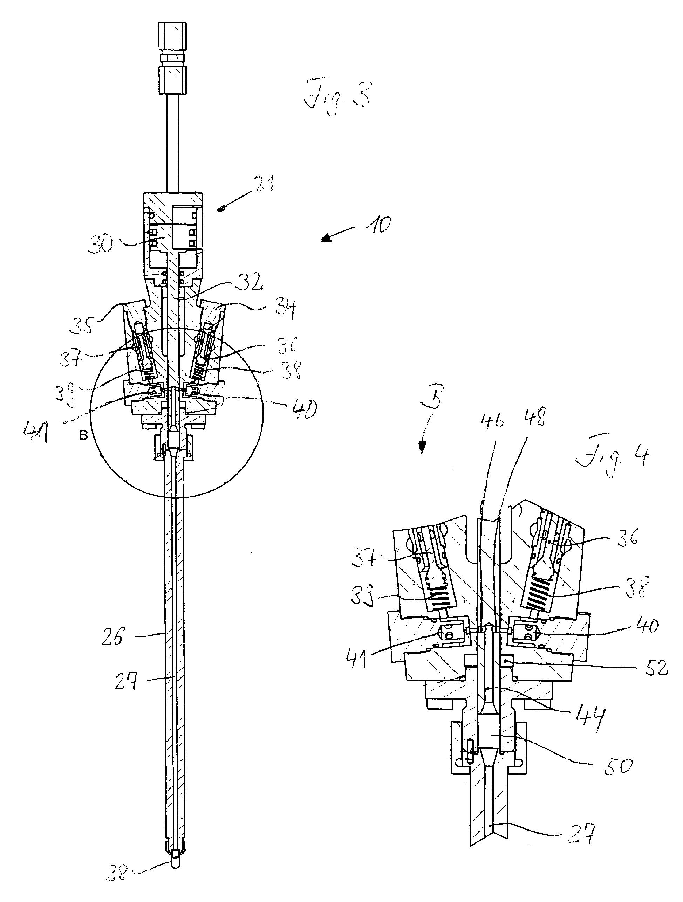

Der innere Aufbau des Mischkörpers 12 ist in Fig. 3 und insbesondere in Fig. 4 gut zu erkennen. Wie gerade erwähnt, weist der Mischkörper 12 eine sich zentral erstreckenden Bohrung auf, in dem der Reinigungs- und Steuerkolben 32 hin und her bewegbar aufgenommen ist. Der Reinigungs- und Steuerkolben 32 ist am oberen Ende mit einem Hydraulikkolben 30 verbunden, der in einem Hydraulikzylinder des hydraulischen Kolbenantriebs 21 bei entsprechender Beaufschlagung hin und her bewegt wird. Zur Betätigung des Kolbens 32 wird über die Hydraulikleitungen 24 und 24' Hydrauliköl jeweils auf eine der beiden Seiten des Hydraulikkolbens 30 geleitet und dieser entsprechend beaufschlagt.

Der Reinigung- und Steuerkolben 32 weist im in den Fig. 3 und 4 unteren Bereich eine koaxial angeordnete, sich nach unten öffnende und sich im unteren Bereich aufweitende Bohrung auf, welche die Funktion einer Mischkammer 44 besitzt. Im oberen Bereich der Mischkammerbohrung 44 sind zwei diametral gegenüberliegende kleine Bohrungen 46 und 48 vorgesehen, die jeweils eine Strömungsverbindung zwischen der Mischkammer und der Außenseite des Reinigungs- und Steuerkolbens 32 vorsehen.

Am unteren Ende des Mischkörpers 12 schließt unmittelbar eine Sprühlanze 26 an, in der ein Austragskanal 27 vorgesehen ist. Die Sprühlanze 26 ist dabei derart an den Mischkörper 12 angesetzt, dass der Austragskanal 27 in koaxialer weise die Strömungsfortsetzung der Bohrung 50 bildet. Der Austragskanal 27 mündet austragsseitig der Sprühlanze 26 in einer Sprühdüse 28, die so ausgebildet ist, dass ein Sprühstrahl in einer gewünschten Weise erzeugt werden kann.

Wie in Fig. 4, welche den Ausschnitt B aus Fig. 3 vergrößert darstellt, genauer zu erkennen ist, kann der Reinigungs- und Steuerkolben 32 in der Bohrung 50 in einem bestimmten Hub-Bereich hin und her (auf und ab) bewegt werden. In einer oberen Position, wie sie in Fig. 4 zu erkennen ist, sind dabei die beiden Bohrungen 46 und 48 fluchtend mit den zugeordneten Bohrungen in dem Mischkörper 12 ausgebildet, so dass in diesem Zustand die beiden Materialkomponenten über die Ventile 34 und 35 und die Düsen 40 und 41 sowie die Kanäle 46 und 48 in den Mischraum 44 des Reinigungs- und Steuerkolbens 32 eingebracht werden können.

Wird der Reinigungs- und Steuerkolben 32 durch eine entsprechende Beaufschlagung des Hydraulikkolben 30 nach unten bewegt, so verschieben sich die Bohrungen 46 und 48 ebenfalls nach unten, mit der Folge, dass die Ausgänge der beiden Düsen 40 und 41 vom Reinigungs- und Steuerkolben 32 versperrt werden. Ist der Reinigungs- und Steuerkolben weit genug nach unten verschoben, so kommen die Bohrungen 46 und 48 in Fluidverbindung mit einer Luftversorgungskammer 52, die mit der Luftzufuhrleitung 22 unmittelbar in Verbindung steht. Über diese Luftzufuhrleitung 22 sowie die Luftversorgungskammer 52 können von einer Luftversorgung zur Verfügung gestellte Spüllluft durch die Kanäle 46 und 48, die Mischkammer 44, die Bohrung 50 und den Austragskanal 27 geleitet und diese Hohlräume vom reaktiven Materialgemisch befreit werden.

Die Funktionsweise des vorliegenden Sprühkopfs wird nachfolgend erläutert. Ist ein in einer jeweiligen Rückführkanälen 18, 20 angeordnetes Ventil (nicht dargestellt) wie oben bereits beschrieben auf Durchlass geschaltet, so fließen die beiden Materialkomponenten jeweils von ihrer Zuführleitung 14 und 16 ohne großen, weiteren Druckaufbau über die entsprechenden Rückführleitungen 18 und 20 in einer Rezirkulation zurück.

Werden jedoch die Ventile in den beiden Rückführkanälen 18 und 20 geschlossen, so steigt der Druck an und wirkt gegen die aufgrund der Federvorspannung der Federn 38 und 39 gegen den Ventilsitz gedrückten Ventilnadeln 36 und 37. Ist ein bestimmter Druck erreicht, so heben sich die Ventilnadeln 36 und 37 vom Ventilsitz ab und ermöglichen einen Durchfluss der Materialkomponenten durch den Ventilraum zu den jeweiligen Düsen 40 und 41.

Befindet sich der Reinigungs- und Steuerkolben 32 nun in der zurückgezogenen Position, wie dies in Fig. 4 dargestellt ist, so können die beiden Materialkomponenten 1 und 2 über die Bohrungen 46 und 48 der Mischkammer 44 zugeführt werden, wo sie im Gegenstrahlverfahren aufeinander treffen und sich innig miteinander mischen. Die so vermischten und ein reaktives Material bildenden Komponenten fließen in der Mischkammer 44 nach unten, durchfließen den freien Teil der Bohrung 50 und treten in den Austragskanal 27 ein. Nach dem Durchfließen des Austragskanals 27 wird das miteinander vermischte reaktive Material über die Sprühdüse 28 ausgebracht.

Sobald das Ventil in den beiden Rückführkanälen 18 und 20 wieder geöffnet wird, fällt der Druck in den beiden Zufuhrleitungen 14 und 16 wieder ab und die beiden Rückschlagventile 34 und 35 schließen, wodurch der Sprühvorgang beendet wird.

Vorgreifend der Beendigung der Materialzufuhr oder gleichzeitig oder auch anschließend kann der Reinigungs- und Steuerkolben 32 mittels einer entsprechenden Beaufschlagung des Hydraulikzylinders 30 nach unten verfahren werden, so dass die Strömungsverbindung zwischen den beiden Düsen 40 und 41 und den Kanälen 46 und 48 im Reinigungs- und Steuerkolben 32 unterbrochen wird.

Gleichzeitig wird das in der Kolbenbohrung 50 vorhandene Material nach unten ausgedrückt. Ist nun der Reinigungs- und Steuerkolben 32 so weit nach unten verfahren, dass die beiden Bohrungen 46 und 48 in Strömungsverbindung mit der Spülluftzufuhr 52 gelangen, so wird die durch die Luftzufuhrleitung 22 zugeführte Spülluft über die Bohrungen 46 und 48 und die Mischkammer 44 durch den Austragskanal 27 geführt, wobei sämtliche Kanäle und Kammern von der reaktiven Materialmischung gereinigt werden.

Zum nächsten Sprühvorgang kann der Reinigungs- und Steuerkolben dann wieder zurückgezogen und das Ventil in den beiden Rückführkanälen 18 und 20 wieder geschlossen werden. Dann erfolgt wieder ein Druckaufbau, wodurch sich wiederum die Rückschlagventile 34 und 35 wieder öffnen und - bei entsprechend angeordnetem Kolben 32 - wieder ein Sprühvorgang durchgeführt wird.

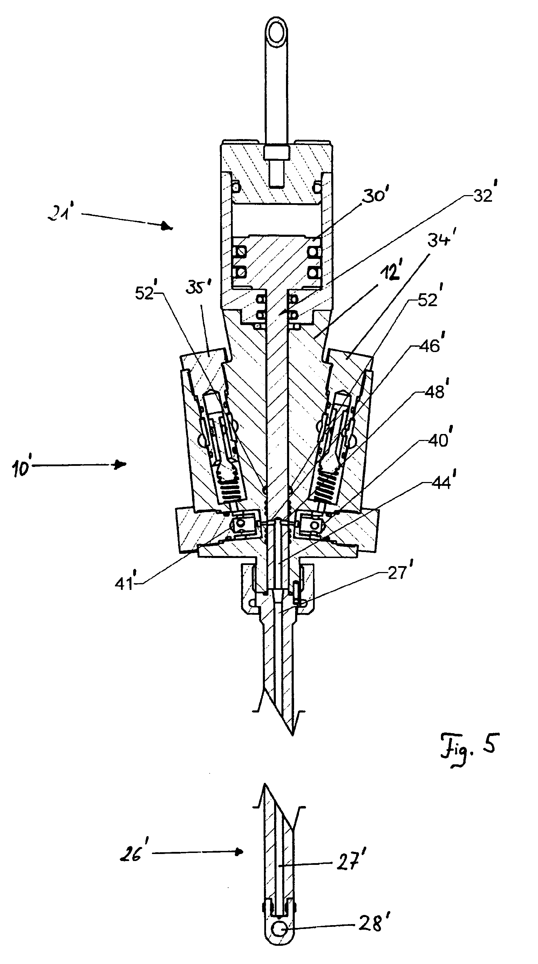

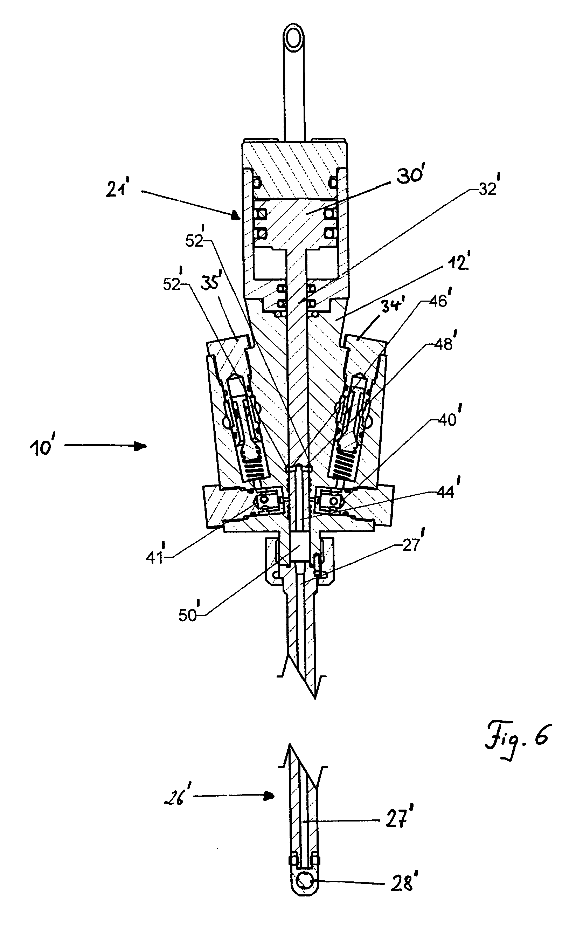

Eine weitere, gegenüber den in den Fig. 1 bis 4 etwas abgeänderte Ausführungsform der vorliegenden Erfindung ist in den Fig. 5 und 6 dargestellt. Dabei bezeichnen die mit ' gekennzeichneten Bezugsziffern analoge, in der Ausführungsform der Fig. 1 bis 4 ohne ' bezeichnete Konstruktionselemente.

Insgesamt sind in der zweiten Ausführungsform nahezu alle Teile gleich ausgebildet, bis auf die Mischkammer 44' zusammen mit den Kanälen 46' und 48' sowie der Spülzufuhr im Gehäuse des Mischkörpers 12' , die nunmehr oberhalb der Materialzufuhr angeordnet ist.

Der Grund für diese Änderung gegenüber der Ausführungsform der Fig. 1 bis 4 liegt darin, dass man bei dieser Ausführungsform nicht nur das reaktive Materialgemisch in der Mischkammer 44 und im Austragskanal 27 beim Reinigen entfernen, sondern auch den Raum zwischen dem Reinigungs- und Steuerkolben 32 und der Sprühlanze 26 reinigen muss.

Die zweite Ausführungsform ist nunmehr so konstruiert, dass beim Misch- und Austragsvorgang selbst im wesentlichen kein Raum zwischen dem Mischkolben 44' und der Sprühlanze 26' gebildet ist. Dieser Betriebszustand, in dem über die Rückschlagventile 34' und 35' , die Düsen 40' und 41' und die Kanäle 46' und 48' die Ausgangsmaterialien in die Mischkammer 44' eingebracht werden, ist in Fig. 5 dargestellt.

Soll nunmehr der Misch- und Austragsvorgang gestoppt oder unterbrochen werden, so wird zum einen die Materialzufuhr in der gleichen Weise, wie oben beschrieben, gestoppt; der Reinigungs- und Steuerkolben 32' wird nunmehr aber nicht nach unten, sondern nach oben verfahren. Erst bei diesem Vorgang bildet sich ein Raum zwischen dem Reinigungs- und Steuerkolben 32' und der Sprühlanze 26' aus. In diesem Raum wird sich auch Material ansammeln, jedoch kein neues und zusätzliches Material, sondern, beispielsweise das im Austragskanal 27' befindliche Material.

Der Reinigungs- und Steuerkolben 32' wird soweit zurückverfahren, bis die Kanäle 46' und 48' mit der nunmehr oberhalb der Materialzufuhröffnungen angerordneten Ringnut 52' in Strömungsverbindung stehen, so dass Spülluft von einer nicht dargestellten Luftversorgung über einen Luftkanal und die Ringnut 52' die Kanäle 46' und 48' , die Mischkammer 44' , den Raum nach der Mischkammer 44' und den Austragskanal 27' in der Sprühlanze 26' spülen.

Damit muss bei dieser Ausführungsform beim Spülvorgang etwas weniger Material ausgespült werden.

Mit der vorliegenden Erfindung lässt sich auf die vorbeschriebene Art und Weise insgesamt ein kompakter und leicht zu reinigender Sprühkopf herstellen.

## Patentansprüche

1. Sprühkopf zum Ausbringen eines zumindest aus zwei reaktiven Komponenten bestehenden Materials umfassend
- eine Materialzufuhreinrichtung (14) für eine erste Komponente,
- eine Materialzufuhreinrichtung (18) für eine zweite Komponente,
- eine mit den Materialzufuhreinrichtungen (14, 18) in Strömungsverbindung bringbare Mischkammer (44, 44' ) zum Vermischen der beiden Komponenten,
- einen hin und her bewegbaren Kolben (32, 32' ) und
- einen Austragskanal (27, 27' ) zum Austragen der miteinander vermischten Komponenten, der mit der Mischkammer verbunden oder verbindbar ist,
wobei,
- die Mischkammer (44, 44' ) im wesentlichen im hin- und her bewegbaren Kolben (32, 32' ) vorgesehen ist, und .
- der Kolben (32, 32' ) und die Materialzufuhreinrichtungen (14, 18) derart ausgestaltet sind, dass in zumindest einer ersten Position des Kolbens (32, 32' ) eine Zufuhr der Komponenten in die Mischkammer (44, 44' ) möglich ist,
**dadurch gekennzeichnet,**
**dass** eine Luft- und/oder Flüssigkeitsversorgungseinrichtung (52, 52' ) vorgesehen ist und die Mischkammer (44, 44' ) im Kolben (32, 32' ) zumindest in einer zweiten Position mit der Luftversorgungseinrichtung in Verbindung bringbar ist.

2. Sprühkopf nach Anspruch 1,
**dadurch gekennzeichnet,**
**dass** der Austragskanal (27, 27' ) in einer Sprühlanze (26, 26' ) angeordnet ist.

3. Sprühkopf nach Anspruch 1 oder 2,
**dadurch gekennzeichnet,**
**dass** am austragsseitigen Ende des Austragskanals (27, 27' ) eine Sprühdüse (28, 28' ) angeordnet ist.

4. Sprühkopf nach einem der Ansprüche 1 bis 3,
**dadurch gekennzeichnet,**
**dass** die Materialzufuhr (14, 18) jeweils mit einem Rückflusskanal (16, 20) zur zumindest zeitweiligen Ausbildung einer Rezirkulation verbunden oder verbindbar ist.

5. Sprühkopf nach Anspruch 4,
**dadurch gekennzeichnet,**
**dass** in der Materialzufuhr (14, 18) jeweils ein Ventil (34, 34' ; 35, 35' ) angeordnet ist.

6. Sprühkopf nach Anspruch 5,
**dadurch gekennzeichnet,**
**dass** das Ventil (34, 34' ; 35, 35' ) derart ausgebildet ist, dass der Strömungsweg zur Mischkammer (44, 44' ) dann freigegeben oder freigebbar ist, wenn der Rückfluss (16, 20) unterbunden ist.

7. Sprühkopf nach Anspruch 5 oder 6,
**dadurch gekennzeichnet,**
**dass** das Ventil als Rückschlagventil (34, 34' ; 35, 35' ), insbesondere mit einstellbarer Vorspannung, ausgebildet ist.

8. Sprühkopf nach einem der Ansprüche 1 bis 7,
**dadurch gekennzeichnet,**
**dass** die Luft- und/oder Flüssigkeitsversorgungseinrichtung (52, 52' ) einen Austrittskanal in der Oberfläche der Bohrung umfasst, in welcher der Reinigungs-und Steuerkolben hin- und her beweglich geführt ist und der Austrittskanal mit den Kanälen (46, 46' ; 48, 48' ) im der Reinigungs- und Steuerkolben in der zweiten Position in Strömungsverbindung stehen.

9. Sprühkopf nach Anspruch 8,
**dadurch gekennzeichnet,**
**dass** der Austrittskanal in Form einer Ringnut ausgebildet ist.

## Claims

1. A spray head for discharging a material that is composed of at least two reactive components, comprising
- a material feeding device (14) for a first component,
- a material feeding device (18) for a second component,
- a mixing chamber (44, 44') for mixing the two components, which is able to be brought into a flow connection with the material feeding devices (14, 18),
- a reciprocating piston (32, 32') and
- a discharge channel (27, 27') for discharging the components that are mixed with each other, which is connected or connectable to the mixing chamber,
wherein
- the mixing chamber (44, 44') is substantially provided in the reciprocating piston (32, 32'), and
- the piston (32, 32') and the material feeding devices (14, 18) are configured in such a manner that a supply of the components into the mixing chamber (44, 44') is possible in at least a first position of the piston (32, 32'),
**characterized in that**
an air- and/or fluid supply device (52, 52') is provided and the mixing chamber (44, 44') in the piston (32, 32') is able to be brought in connection with the air supply device at least in a second position.

2. The spray head according to Claim 1,
**characterized in that**
the discharge channel (27, 27') is arranged in a spray lance (26, 26').

3. The spray head according to Claim 1 or 2,
**characterized in that**
a spray nozzle (28, 28') is arranged at the end of the discharge channel (27, 27') on the discharge side.

4. The spray head according to any of Claims 1 to 3,
**characterized in that**
the material feed (14, 18) is connected or connectable respectively to a return flow channel (16, 20) for the at least intermittent formation of a recirculation.

5. The spray head according to Claim 4,
**characterized in that**
a valve (34, 34'; 35, 35') is respectively arranged in the material feed (14, 18).

6. The spray head according to Claim 5,
**characterized in that**
the valve (34, 34'; 35, 35') is configured in such a manner that the flow path to the mixing chamber (44, 44') is then freed or is able to be freed when the return flow (16, 20) is stopped.

7. The spray head according to Claim 5 or 6,
**characterized in that**
the valve is constructed as a non-return valve (34, 34'; 35, 35'), in particular with adjustable pre-stressing.

8. The spray head according to any of Claims 1 to 7,
**characterized in that**
the air- and/or fluid supply device (52, 52') comprises an outlet channel in the surface of the bore, in which the cleaning- and control piston is guided so as to be movable reciprocally, and the outlet channel with the channels (46, 46'; 48, 48') in the cleaning- and control piston are in flow connection in the second position.

9. The spray head according to Claim 8,
**characterized in that**
the outlet channel is constructed in the form of an annular groove.

## Revendications

1. Tête de pulvérisation pour l'expulsion d'une matière consistant au moins dans deux composants réactifs, comprenant
- un dispositif d'alimentation de matière (14) pour un premier composant,
- un dispositif d'alimentation de matière (18) pour un deuxième composant,
- une chambre de mélange (44, 44') susceptible d'être amenée en liaison par écoulement avec les dispositifs d'alimentation de matière (14, 18), pour mélanger les deux composants,
- un piston (32, 32') mobile de part et d'autre et
- un canal d'évacuation (27, 27') pour évacuer les composants mélangés l'un avec l'autre, qui est relié ou susceptible d'être relié avec la chambre de mélange,
- la chambre de mélange (44, 44') étant prévue dans le piston (32, 32') mobile de part et d'autre et
- le piston (32, 32') et les dispositifs d'alimentation de matière (14, 18) étant conçus de sorte que dans au moins une position du piston (32, 32'), une alimentation des composants dans la chambre de mélange (44, 44') est possible,
**caractérisée en ce que**
un dispositif d'apport d'air et/ou de liquide (52, 52') est prévu et la chambre de mélange (44, 44') dans le piston (32, 32') est susceptible d'être amenée en liaison avec le dispositif d'apport d'air au moins dans une deuxième position.

2. Tête de pulvérisation selon la revendication 1,
**caractérisée en ce que**
le canal d'évacuation (27, 27') est disposé dans une lance de pulvérisation (26, 26').

3. Tête de pulvérisation selon la revendication 1 ou 2,
**caractérisée en ce que**
sur l'extrémité sortie évacuation du canal d'évacuation (27, 27') est disposé un pulvérisateur (28, 28').

4. Tête de pulvérisation selon l'une quelconque des revendications 1 à 3,
**caractérisée en ce que**
l'alimentation de matière (14, 18) est reliée ou susceptible d'être reliée chaque fois avec un canal de retour (16, 20) pour la création au moins temporaire d'une recirculation.

5. Tête de pulvérisation selon la revendication 4,
**caractérisée en ce que**
dans l'alimentation de matière (14, 18) est chaque fois disposée une soupape (34, 34' ; 35, 35').

6. Tête de pulvérisation selon la revendication 5,
**caractérisée en ce que**
la soupape (34, 34', 35, 35') est conçue de sorte que le trajet d'écoulement vers la chambre de mélange (44, 44') est libéré ou susceptible d'être libéré lorsque le retour (16, 20) est supprimé.

7. Tête de pulvérisation selon la revendication 5 ou 6,
**caractérisée en ce que**
la soupape est conçue en tant que clapet anti-retour (34, 34' ; 35, 35'), notamment avec une précontrainte réglable.

8. Tête de pulvérisation selon l'une quelconque des revendications 1 à 7,
**caractérisée en ce que**
le dispositif d'apport d'air et/ou de liquide (52, 52') comprend un canal de sortie dans la surface du perçage, dans lequel le piston de nettoyage et de commande est guidé en étant mobile de part et d'autre et dans la deuxième position, le canal de sortie est susceptible d'être amené en liaison par écoulement avec les canaux (46, 46' ; 48, 48') dans le piston de nettoyage et de commande.

9. Tête de pulvérisation selon la revendication 8,
**caractérisée en ce que**
le canal de sortie est conçu sous la forme d'une rainure annulaire.
